# EUROPÄISCHE PATENTSCHRIFT

(11) **EP 1 923 251 B1**
(45) Veröffentlichungstag und Bekanntmachung des Hinweises auf die Patenterteilung: **19.01.2011**
(21) Anmeldenummer: 07022279.9
(22) Anmeldetag: 16.11.2007
(51) Int. Cl.: B60J 7/20

(54) **Cabriolet-Fahrzeug mit einem unter einem Verdeckkastendeckel ablegbaren Verdeck, Verdeckkastenmodul sowie Verfahren zum Betätigen eines Verdeckdeckels**
Convertible vehicle with a cover storable underneath a cover box lid, cover box module and method for activating a cover lid
Véhicule décapotable doté d'une capote pouvant être rangée sous un système de plage arrière, module de plage arrière ainsi que procédé d'actionnement d'un système de plage arrière

(30) Priorität: 18.11.2006 DE 102006054397
(43) Veröffentlichungstag der Anmeldung: 21.05.2008
(73) Patentinhaber: Wilhelm Karmann GmbH, 49084 Osnabrück (DE)
(72) Erfinder: Böhnke, Achim, 49545 Tecklenburg (DE); Selle, Heinrich, 32549 Bad Oeynhausen (DE)
(74) Vertreter: Kronthaler, Schmidt & Coll.

(56) Entgegenhaltungen:
- WO-A-2004/041573
- DE-A1- 4 446 483
- DE-A1-102005 035 271
- DE-U1- 29 812 164
- FR-A- 2 851 751
- FR-A- 2 853 601

## Beschreibung

Die Erfindung betrifft ein Cabriolet-Fahrzeug gemäß dem Oberbegriff des Anspruchs 1. Die Erfindung betrifft weiter ein Verfahren zum Betätigen eines Verdeckdeckels in Abstimmung mit der Betätigung eines Verdecks eines Cabriolet-Fahrzeugs.

Aus der DE 298 12 165 U1 ist ein Cabriolet-Fahrzeug gemäß dem Oberbegriff des Anspruchs 1 bekannt. Bei diesem Cabriolet-Fahrzeug sind beidseitig an der Karosserie Führungsschienen vorgesehen, in denen Führungsbauteile auf- und abwärts verschiebbar sind, an denen der Verdeckdeckel derart schwenkbar gelagert ist, dass er sich in seiner abgesenkten, senkrechten Verdeckfreigabestellung auf der vom zusammengelegten Verdeck abgewandten Seite der Führungsschienen befindet. Wenn das Verdeck geschlossen wird, muss der Verdeckdeckel aus der Verdeckfreigabestellung unter Umkehrung der Bewegungsabläufe, die beim Bewegen des Verdeckdeckels aus der Verdeckabdeckstellung in die Verdeckfreigabestellung erfolgen, zurück in die Verdeckabdeckstellung bewegt werden. Dies schränkt den konstruktiven Freiraum ein, da der Verdeckdeckel bei geschlossenem Verdeck in dem Raum unterhalb des Verdecks oberhalb der Fahrzeuggürtellinie verschwenkt werden muss.

Aus der DE 298 12 165 U1 ist ein Cabriolet-Fahrzeug mit einer Verdeckklappe bekannt, die aus einer waagerechten Verdeckabdeckstellung in eine senkrechte Verdeckfreigabestellung bewegbar ist. Um den von der Verdeckklappe bei deren Verschwenken aus der waagerechten Stellung in die senkrechte Stellung benötigten Bauraum zu vermindern, ist die Verdeckklappe aus zwei zusammenklappbaren, in der Verdeckabdeckstellung bezüglich der Fahrzeuglängsrichtung hintereinander angeordneten Teilen zusammengesetzt, wodurch der Aufbau der Verdeckklappe verhältnismäßig kompliziert ist.

Aus der US 2005/0077751 A1 ist ein Cabriolet-Fahrzeug mit einer Verdeckklappe bekannt, die aus einer waagerechten Verdeckabdeckstellung in eine etwa senkrechte Verdeckfreigabestellung bewegbar ist, in der sich die Verdeckklappe bezogen auf die Fahrzeuglängsrichtung vor dem zusammengelegten Verdeck oberhalb der Fahrzeuggürtellinie befindet.

Aus der WO 2004/041573 A1 ist ebenfalls ein Verdeckkastendeckelmechanismus bekannt, bei dem der Verdeckkastendeckel zwischen einer senkrechten Verdeckkastenfreigabestellung und einer waagerechten Verdeckkastenabdeckstellung bewegbar ist, wobei der Verdeckkastendeckel zur Überführung aus der Verdeckkastenfreigabestellung in die Verdeckkastenabdeckstellung an seitlichen Führungen zunächst linear nach oben bewegt und in einer ausgefahrenen Stellung in seine waagerechte Situation abgeklappt wird.

Eine ähnliche Lösung, bei der ein Verdeckkastendeckel aus einer im Wesentlichen horizontalen, den Verdeckkasten abdeckenden Schließstellung in eine aufrechte, in das Cabriolet-Fahrzeug abgesenkte Öffnungsstellung verlagerbar ist, ist auch aus der DE 298 12 164 U1 bekannt. Bei dieser Lösung wird während der Verlagerung des Verdeckkastendeckels aus seiner den Verdeckkasten abdeckenden Position in eine den Verdeckkasten freigebende Öffnungsstellung zunächst der Verdeckkastendeckel um eine seinem vorderen Kantenbereich zugeordnete Schwenkachse aufwärts verschwenkt, so dass eine aufrechte Position des Verdeckkastendeckels oberhalb der Brüstungslinie des Cabriolet-Fahrzeugs eingestellt wird. Anschließend erfolgt die Absenkung des Verdeckkastendeckels in eine hinter der angrenzenden Sitzreihe befindliche vertikale Position.

Weitere, insbesondere im Hinblick auf den Bewegungsraum des Verdeckkastendeckels und der damit zusammenhängenden Gestaltungsfreiheit bei der Fahrzeugheckgestaltung verbesserungsfähige Mechanismen zur Verlagerung eines Verdeckkastendeckels zwischen einer wenigstens annähernd horizontalen Position und einer wenigstens annähernd vertikalen Position sind aus der FR 2,851 751 A, der FR 2,853 601 A, der DE 44 46 483 A1 und der DE 10 2005 035 271 A1 bekannt.

Der Erfindung liegt die Aufgabe zugrunde, ein gattungsgemässes Cabriolet-Fahrzeug dahingehend weiterzubilden, dass bei einfacher Ausbildung der Verdeckklappe und weitgehender konstruktiver Freiheit bezüglich der Gestaltung insbesondere des Heckbereiches des Verdecks das zusammengelegte Verdeck durch die Verdeckklappe weitgehend abgedeckt werden kann und bei geschlossenem Verdeck die Verdeckklappe als "Hutablage" zur weitgehenden Abtrennung des Kofferraums bzw. des Verdeckablagebereiches des Kofferraums vom Fahrzeuginnenraum genutzt werden kann.

Diese Aufgabe wird mit einem Cabriolet-Fahrzeug gemäß dem Anspruch 1 gelöst.

Dadurch, dass erfindungsgemäß der Verdeckkastendeckel unmittelbar aus seiner abgesenkten Verdeckfreigabestellung in eine etwa waagerechte Zwischenstellung verschwenkt werden kann und aus dieser Stellung heraus angehoben werden kann, ist die Gestaltung des Verdeckkastendeckels durch den Raum unterhalb des geschlossenen Verdecks bzw. dessen Kontur nicht eingeschränkt, so dass der Verdeckkastendeckel das abgelegte Verdeck in Verdeckablagestellung weitgehend abdecken kann und in einer Hutablagestellung, die mit der Verdeckabdeckstellung gleich sein kann oder sich geringfügig unterhalb der Verdeckabdeckstellung befindet, den Fahrzeuginnenraum wirksam vom Gepäckraum trennt.

Die Unteransprüche sind auf vorteilhafte konstruktive Details und Weiterbildungen des erfindungsgemäßen Cabriolet-Fahrzeugs gerichtet.

Der Anspruch 14 kennzeichnet ein vorteilhaftes Verfahren zur abgestimmten Betätigung des Verdeckdeckels mit dem Verdeck.

Die Erfindung wird im Folgenden anhand schematischer Zeichnungen beispielsweise und mit weiteren Einzelheiten erläutert.

In den Figuren stellen dar:
- Fig. 1: eine Seitenansicht eines Heckbereichs eines Fahr- zeugs, teilweise aufgeschnitten,
- Fig. 2: eine perspektivische Ansicht eines Verdeckkastenmo- duls,
- Fig. 3: perspektivische Ansichten des Verdeckkastenmoduls gemäß Fig. 2 in unterschiedlichen Stellungen des Verdeckdeckels,
- Fig. 4: perspektivische Ansichten des Verdeckkastenmoduls gemäß Fig. 2 mit gegenüber den in der Fig. 3 gezeig- ten Stellungen alternativ ausgebildeten Stellungen des Verdeckdeckels,
- Fig. 5: eine vereinfachte dreidimensionale Ansicht eines alternativ zu dem in der Fig. 2 dargestellten Ver- deckkastenmodul ausgebildeten Verdeckkastenmodul, und
- Fig. 6: eine vereinfachte dreidimensionale Ansicht eines Ausschnitts des Verdeckkastenmoduls der Fig. 5 in einer anderen Stellung.

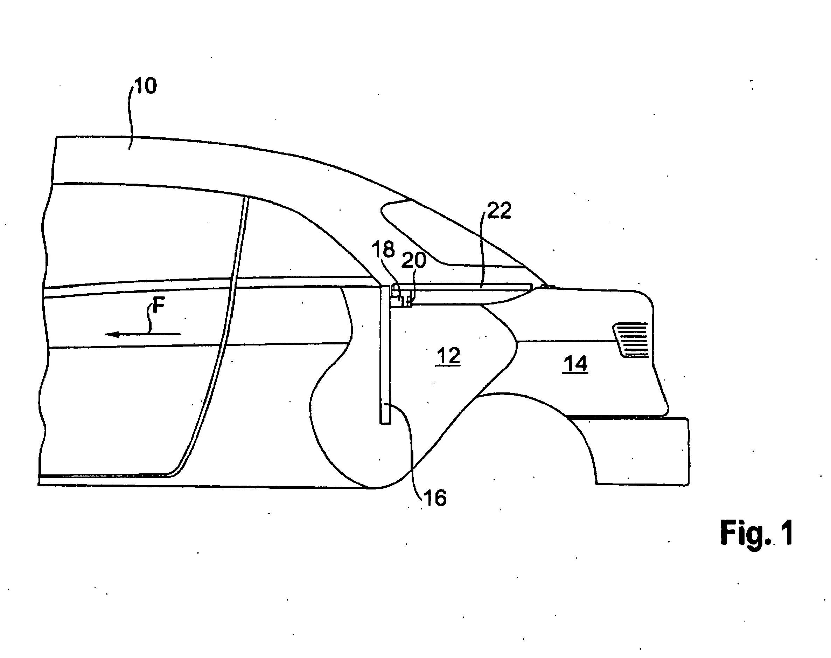

Gemäß Fig. 1 weist ein Cabriolet-Fahrzeug, dessen Vorwärtsrichtung mit einem Pfeil F bezeichnet ist, ein Verdeck 10 auf, das in einem Verdeckablagebereich 12 im vorderen oberen Bereich eines im Heck des Fahrzeugs ausgebildeten Gepäckraums 14 zusammenfaltbar und ablegbar ist. Das Verdeck 10 kann ein Stoffverdeck oder ein Hartschalenverdeck sein und ist in an sich bekannter Weise mit seitlichen Gestängeteilen versehen, die über ein Grundscharnier an jeder Fahrzeugseite gelenkig befestigt sind.

Die Bezeichnungen vorderer oder "vor" beziehen sich im Folgenden auf die Fahrzeuglängsrichtung F und bedeuten "in Fahrzeuglängsrichtung vor". Die Bezeichnungen "seitlich" beziehen sich auf die Fahrzeugquerrichtung und bedeuten "in Fahrzeugquerrichtung neben".

Im Bereich des vorderen Endes des Gepäckraums 14 sind beidseitig an der Fahrzeugkarosserie Führungsschienen 16 befestigt, die etwa senkrecht verlaufen und in denen jeweils ein Führungsbauteil 18 längs der Führungsschiene 16 verschiebbar geführt ist. An jedem Führungsbauteil 18 ist mittels einer Lagerung 20 ein Verdeckkastendeckel 22 um eine in Querrichtung des Fahrzeugs verlaufende Schwenkachse schwenkbar befestigt.

In der Stellung der Fig. 1 befindet sich der Verdeckkastendeckel 22 in seiner etwa waagerechten Hutablagestellung, in der er den Gepäckraum 14 bzw. dessen Verdeckablagebereich 12 vom Fahrzeuginnenraum trennt. Die Führungsschienen 16 befinden sich beispielsweise seitlich an einer Trennwand, die den Gepäckraum in Längsrichtung des Fahrzeugs vom Fahrzeuginnenraum trennt und die mit einer Durchladeöffnung versehen sein kann.

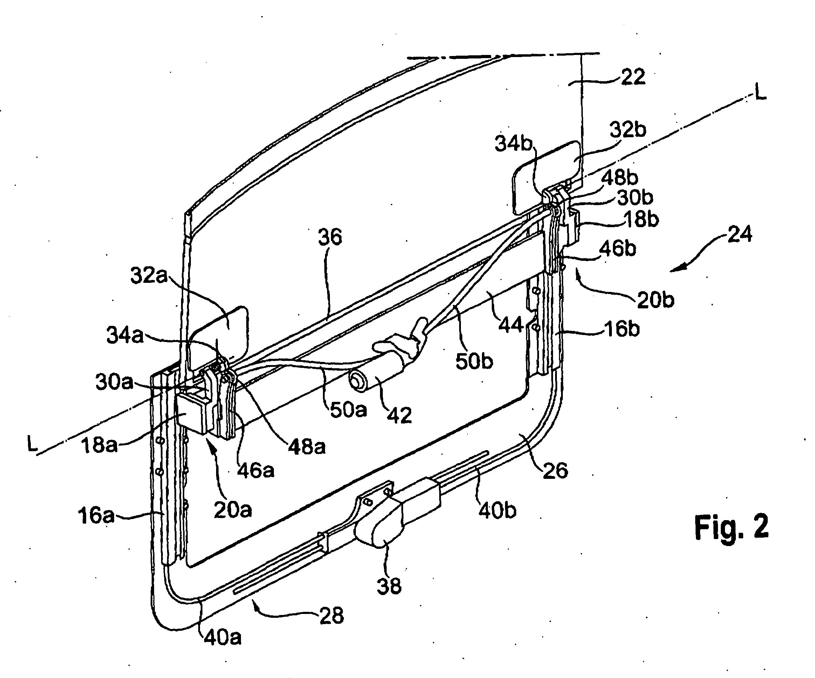

Fig. 2 zeigt in perspektivischer Ansicht Einzelheiten einer insgesamt mit 24 bezeichneten komplett vormontierten, ein Verdeckkastendeckelmodul bildenden Baugruppe. Fig. 2 zeigt das Verdeckkastendeckelmodul in einer Ansicht bezogen auf das Fahrzeug gemäß Fig. 1 links von hinten. Die linksseitige Führungsschiene ist mit 16a bezeichnet. Die rechtsseitige Führungsschiene ist mit 16b bezeichnet. Die Führungsschienen 16a und 16b bilden zusammen mit einem Querträger 26 eine insgesamt U-förmige Tragbaugruppe 28 die mit nicht dargestellten Befestigungsmitteln, beispielsweise Schrauben, an entsprechenden Aufnahmen in der Karosserie befestigbar ist. An jeder Führungsschiene 16a und 16b ist ein Führungsbauteil 18a und 18b verschiebbar geführt. Von jedem Führungsbauteil 18a, 18b steht nach oben ein Lagerarm 30a, 30b vor, an dessen freiem Ende der Verdeckdeckel 22 um eine Schwenkachse L-L, die etwa in Fahrzeugquerrichtung verläuft, schwenkbar gelagert ist. Dazu sind am Verdeckkastendeckel 22 an dessen vorderen seitlichen Endbereichen Konsolen 32a, 32b befestigt, von denen Ansätze 34a, 34b vorstehen, die mit den Lagerarmen 30a, 30b über Schwenkzapfen verbunden sind.

Die Geometrie der geschilderten Lagerung ist derart, dass der Verdeckkastendeckel 22 unabhängig von der Stellung der Führungsbauteile 18a, 18b relativ zu den Führungsschienen 16a, 16b aus der waagerechten Stellung beispielsweise gemäß Fig. 1 in die senkrechte Stellung gemäß Fig.2 verschwenkbar ist, d. h. die Schwenkachse L-L ist vorteilhafterweise relativ zu den Führungsschienen 16a, 16b zur Rückseite des Fahrzeugs hin versetzt, so dass der Vorderrand 36 des Verdeckkastendeckels 22 beim Verschwenken des Verdeckkastendeckels 22 nicht in Berührung mit den Führungsschienen 16a, 16b kommt.

Zum Verschieben der Führungsbauteile 18a, 18b längs der Führungsschienen 16a, 16b ist auf dem Querträger 26 ein Motor 38, beispielsweise ein Elektromotor befestigt, der in Führungsrohren 40a, 40b befindliche Seile bzw. Steigungskabel gegensinnig linear bewegt, deren freie Enden mit den Führungsbauteilen 18a, 18b verbunden sind. Die Seile sind innerhalb der Führungsschienen 16 derart geführt, dass mit ihnen in beide senkrechte Richtungen wirkende Kräfte auf die Führungsbauteile 18a, 18b übertragen werden können. Der Motor 38 enthält beispielsweise in an sich bekannter Weise ein Ritzel, das an seinen beiden, sich gegenüber liegenden Seiten jeweils in Reib- oder Zahneingriff mit entsprechend ausgebildeten Seilen bzw. Steigungskabeln ist.

Zum Verschwenken des Verdeckkastendeckels 22 dient ein Motor 42, beispielsweise ein Elektromotor, der an einem Verbindungsträger 44 befestigt ist, der die Führungsbauteile 18a, 18b bzw. die Lagerarme 30a, 30b miteinander verbindet. An dem Verbindungsträger 44 sind Arme 46a, 46b vorgesehen, an deren freien Enden Rollen gelagert sind, die in Reibeingriff mit an den Ansätzen 34a, 34b der Konsolen 32a, 32b vorgesehenen ringscheibenförmigen Gegenflächen sind. Der Motor 42 ist über torsionssteife Wellen 50a, 50b drehmomentübertragend mit den Rollen 48a, 48b verbunden, so dass bei einer motorischen Verdrehung der Rollen 48a, 48b in die eine oder in die andere Richtung der Verdeckkastendeckel 22 um die Schwenkachse L-L in die eine oder in die andere Richtung verschwenkt wird.

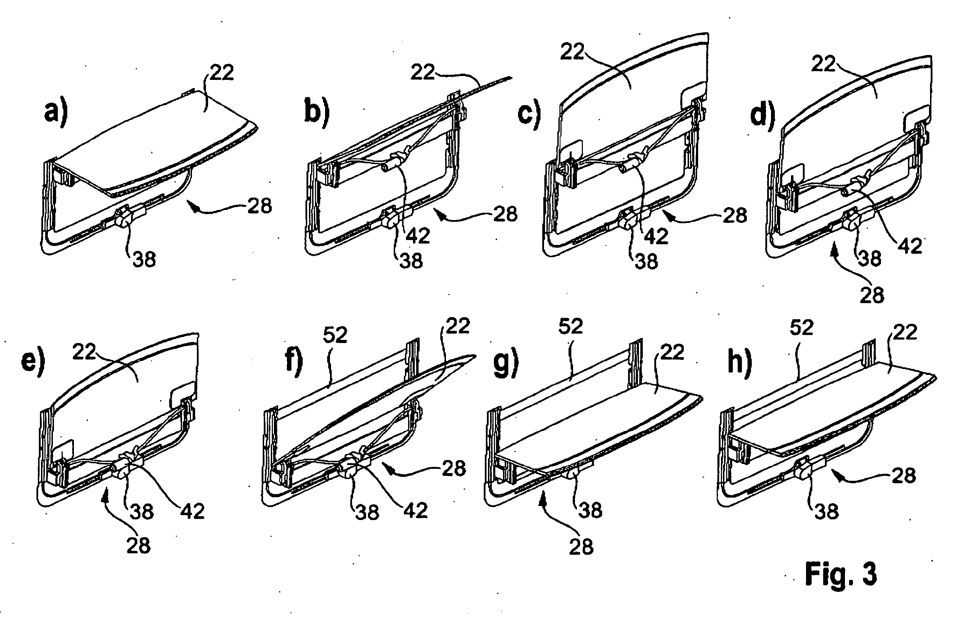

Die Funktion des Verdeckkastendeckelmoduls 24 wird anhand der Fig. 3 im Folgenden erläutert:
Es sei angenommen, dass das Verdeckkastendeckelmodul 24 in das Cabriolet-Fahrzeug insgesamt in der Position gemäß Fig. 1 eingebaut ist, in der die Führungsschienen 16 sich im vorderen Endbereich des Gepäckraums 14 beidseitig an der Fahrzeugkarosserie befinden.

Gemäß Fig. 3a) befindet sich der Verdeckkastendeckel 22 etwa in seiner weitest möglichen angehobenen, waagerechten Stellung, d. h. in seiner Verdeckabdeckstellung, in der er das nicht dargestellte, unter ihm im Heckbereich des Fahrzeugs abgelegte Verdeck überdeckt. Wenn das Verdeck geöffnet werden soll, wird der Verdeckkastendeckel 22 gemäß Fig. 3b) mit Hilfe des Motors 42 aufwärts verschwenkt und gelangt in eine etwa senkrechte Stellung gemäß Fig. 3c), aus der heraus er gemäß Fig. 3d) mittels des Motors 38 in seine Verdeckfreigabestellung gemäß Fig. 3e) abgesenkt wird, in der er den Raum über dem Verdeckablagebereich 12 (Fig.1) zum Schließen des Verdecks freigibt und das Schließen des Verdecks in keiner Weise beeinträchtigt.

Wenn das Verdeck 10 geschlossen ist, kann der Verdeckkastendeckel 22 aus seiner Verdeckfreigabestellung gemäß Fig. 3e) gemäß Fig. 3f) mit Hilfe des Motors 42 in Uhrzeigerrichtung abwärts verschwenkt werden, so dass er in eine waagerechte Zwischenstellung gemäß Fig. 3g) gelangt, in der er sich innerhalb oder unterhalb des Verdeckablagebereiches 12 im Gepäckraum 14 des Fahrzeugs befindet. Aus der Zwischenstellung gemäß Fig. 3g) kann der Verdeckkastendeckel 22 anschließend in eine Hutablagestellung gemäß Fig. 3h) mittels des Motors 38 angehoben werden, in der er gemäß Fig. 1 den Gepäckraum nach oben hin zum unterhalb des Verdecks 10 befindlichen Innenraum abschließt. In dieser Stellung bildet der Verdeckkastendeckel eine Hutablagefläche bzw. eine Ablagefläche für sonstige abzulegende Teile.

Wie aus den Fig. 3f) bis 3h) ersichtlich, können die Führungsschienen 16a, 16b in ihrem oberen Bereich durch einen Querträger 52 verbunden sein, der die gesamte Tragbaugruppe 28 zusätzlich versteift.

In seiner Hutablagestellung gemäß Fig. 3h) befindet sich der Verdeckkastendeckel 22 je nach konstruktiver Ausbildung des Fahrzeugs etwas unterhalb seiner Verdeckabdeckstellung gemäß Fig. 3a) oder etwa in gleicher Höhe mit der Verdeckablagestellung. Es versteht sich, dass die Hutablagestellung, die in Fig. 3h) noch nicht ganz erreicht ist, vorteilhafterweise mindestens so hoch ist, dass der Verdeckkastendeckel 22 zumindest bündig mit dem Querträger 52 verläuft.

Zum Öffnen des Verdecks laufen die Bewegungen gemäß Fig. 3a) bis 3h) in umgekehrter Reihenfolge ab. Es versteht sich, dass das Verschwenken gleichzeitig mit dem Anheben bzw. Absenken des Verdeckkastendeckels 22 erfolgen kann und in den Ablauf des Öffnens und/oder Schließens des Verdecks integriert sein kann, indem die Betätigungen der Motoren 38 und 42 durch die selbe Steuerung erfolgt, die auch die Verdecköffnung bzw. Schließung steuert. Ebenso wie das Verdeck rein manuell betätigt werden kann, kann auch das Verdeckkastendeckelmodul derart ausgebildet sein, dass der Verdeckkastendeckel rein manuell bewegt wird.

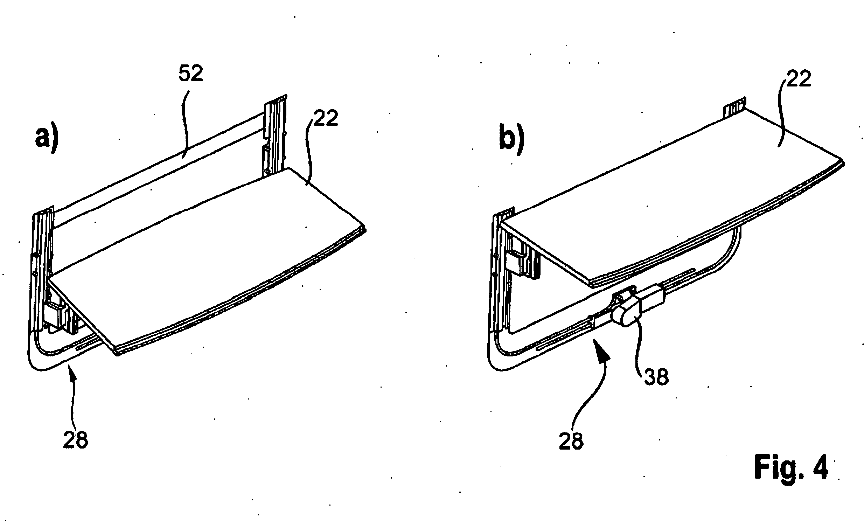

Eine im Wesentlichen der beschriebenen Bewegung des Verdeckkastendeckels 22 entsprechende Bewegung des Verdeckkastendeckels 22 kann dadurch erreicht werden, dass sich an die in den Fig. 3a) bis 3f) dargestellten Bewegungszustände, die in den Fig. 4a) und 4b) dargestellten Bewegungszustände anschließen.

Im Unterschied zu dem bereits beschriebenen Bewegungsablauf wird der Verdeckkastendeckel 22 aus seiner unteren vertikalen Position über die in der Fig. 3f) dargestellte Position, in welcher der Verdeckkastendeckel 22 eine etwa waagerechte horizontale Lage einnimmt, weiterverschwenkt. Der dabei im Wesentlichen noch waagerecht angeordnete Verdeckkastendeckel 22 kann beispielsweise mit der horizontalen Ebene einen Winkel von 8° einschließen, wobei ein vorderes Ende des Verdeckkastendeckels 22 hierdurch um ca. 6 mm höher angeordnet ist als bei dem in der Fig. 3h) dargestellten Zustand. Hierdurch nimmt der Verdeckkastendeckel 22 mit seinem vorderen Ende in etwa die gleiche Position wie bei der in der Fig. 3a) dargestellten Cabriolet-Stellung ein.

An die Schwenkbewegung des Verdeckkastendeckels 22 schließt sich analog zu dem oben beschriebenen Bewegungsablauf ein translatorisches Verschieben des Verdeckkastendeckels 22 von der in der Fig. 4a) gezeigten Position in die in der Fig. 4b) gezeigten Position in Fahrzeughochrichtung an. Sowohl die Verschwenkung als auch die translatorische Bewegung des Verdeckkastendeckels 22 können dabei mit den Motoren 38 und 42 analog zu dem in den Fig. 3a) bis 3f) beschriebenen Bewegungsablauf umgesetzt werden.

Durch die gegenüber einer horizontalen Ebene verschwenkte Anordnung des Verdeckkastendeckels 22 in seiner in der Fig. 4b) dargestellten Position kann vorteilhafterweise ein fließender Übergang der Fahrzeugaußenkontur auch bei geöffnetem Verdeck 10 sichergestellt werden. Hierbei schließt der Verdeckkastendeckel 22 im Wesentlichen versatzlos an die vor und hinter dem Verdeckkastendeckel 22 angeordneten Bauteile an und kann vorteilhafterweise durch die Möglichkeit der leichten Schiefstellung des Verdeckkastendeckels 22 einen Höhenunterschied von gegenüber einem Fahrzeugboden in unterschiedlicher Höhe von vorne und hinten an den Verdeckkastendeckel 22 angrenzenden Bauteilen ausgleichen.

Je nach Anwendungsfall kann somit mit einem derartigen Verdeckdeckelmodul 24 ein Höhenunterschied zwischen an den Verdeckkastendeckel 22 grenzenden Bauteilen sowohl bei geöffnetem als auch bei geschlossenem Verdeck 10 ausgeglichen werden.

Selbstverständlich ist es in einer alternativen Ausbildung der Erfindung auch möglich, andere Stellungen des Verdeckkastendeckels 22 gegenüber einer horizontalen Ebene insbesondere in einem Bereich bis zu 15° einzustellen, wobei zudem auch das hintere Ende des Verdeckkastendeckels 22 bei geöffnetem Verdeck 10 höher als das vordere Ende des Verdeckkastendeckels 22 angeordnet werden kann.

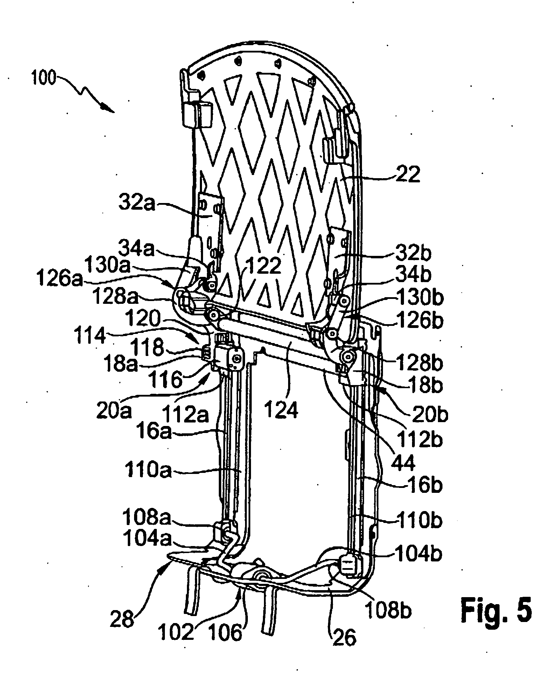

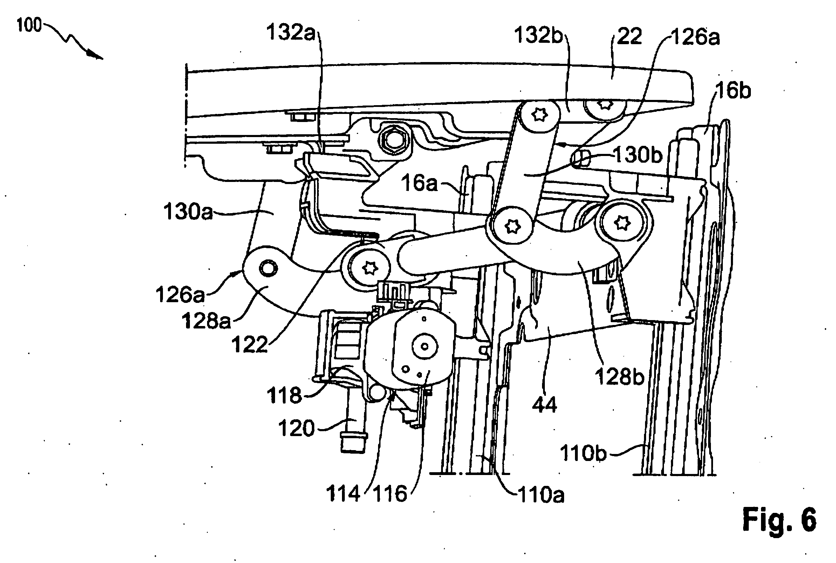

In den Fig. 5 und Fig. 6 ist ein alternativ zu dem in den Fig. 1 bis Fig. 4b) ausgebildetes Verdeckkastendeckelmodul 100 dargestellt, welches allerdings vergleichbar zu den in den Figuren 3a) bis 3h) bzw. Figuren 3a) bis 3f) und 4a) bis 4b) dargestellten Bewegungszuständen bewegbar ist.

Das Verdeckkastendeckelmodul 100 weist zur Bewegung des Verdeckkastendeckels 22 in vertikaler Richtung einen Spindelantrieb 102 auf, der mit zwei flexiblen Wellen 104a, 104b ausgebildet ist, welche über einen zentralen, an dem Querträger 26 angeordneten Motor 106 antreibbar sind. Die flexiblen Wellen 104a, 104b weisen an ihrem dem Motor 106 abgewandten Ende jeweils ein Schneckengetriebe 108a, 108b auf, mittels welchem die flexiblen Wellen 104a, 104b jeweils mit einer Spindel 110a, 110b des Spindelantriebs 102 in Eingriff stehen.

Mit den Spindeln 110a, 110b wirkt jeweils eine Spindelmutter 112a, 112b zusammen, an welcher wiederum der Verdeckkastendeckel 22 angeordnet ist. Eine von dem Motor 106 verursachte Drehung der flexiblen Wellen 104a, 104b resultiert in einer Drehung der Spindeln 110a, 110b, durch welche wiederum die Spindelmuttern 112a, 112b in vertikaler Richtung auf den Spindeln 110a, 110b bewegt werden und somit auch den Verdeckkastendeckel 22 in vertikaler Richtung bewegen.

Eine Umkehr der Drehrichtung des Motors 106 bewegt den Verdeckkastendeckel 22 über eine Bewegung der Spindelmuttern 112a, 112b in entgegengesetzter Richtung auf den Spindeln 110a, 110b.

Zur Verschwenkung des Verdeckkastendeckels 22 ist ein Schwenkantrieb 114 mit einem Schwenkmotor 116 ausgebildet. Der Schwenkmotor 116 treibt eine Spindelmutter 118 an, welche mit einer Spindel 120 derart zusammenwirkt, dass eine Drehung der von dem Schwenkmotor 116 angetriebenen Spindelmutter 118 in einer wenigstens annähernd translatorischen Bewegung der Spindel 120 resultiert. Die Spindel 120 wiederum ist über ein Hebelelement 122 an einer Hauptwelle 124 angeordnet, welche sich in Fahrzeugquerrichtung zwischen den Spindelmuttern 112a, 112b des Spindelantriebs 102 erstrecken.

Der Schwenkmotor 116 des Schwenkantriebs 114 ist dabei außermittig zwischen den Spindeln 110a, 110b des Spindelantriebs 102, vorliegend im Bereich der Spindelmutter 112a, angeordnet, kann aber selbstverständlich auch mittig zwischen den Spindeln 110a, 110b des Spindelantriebs 102 oder im Bereich der Spindelmutter 112b angeordnet werden.

An den Spindelmuttern 112a, 112b des Spindelantriebs 102 ist jeweils ein Viergelenkmechanismus 126a, 126b mit drei Hebelelementen angeordnet, wobei ein erstes Hebelelement 128a, 128b einerseits an der Spindelmutter 112a, 112b drehbar mit der Hauptwelle 124 verbunden und andererseits mit einem zweiten Hebelelement 130a, 130b verbunden ist, welches wiederum an seinem dem ersten Hebelelement 128a, 128b abweisenden Ende mit einem dritten Hebelelement 132a, 132b zusammenwirkt, welches an seinem dem zweiten Hebelelement 130a, 130b mit dem Verdeckkastendeckel 22 verbunden ist.

Eine von der Spindel 120 des Schwenkantriebs 114 über den Schwenkmotor 116 verursachte Drehung der Hauptwelle 124 führt über die Viergelenkmechanismen 126a, 126b zu einer Verschwenkung des Verdeckkastendeckels 22, wobei eine in entgegengesetzter Richtung über die Spindel 120 des Schwenkantriebs 114 von dem Schwenkmotor 116 auf die Hauptwelle 124 wirkende Drehung in einer entgegengesetzten Verschwenkung des Verdeckkastendeckels 22 resultiert.

Der soeben beschriebene Schwenkantrieb 114 und der Spindelantrieb 102 zur translatorischen und rotatorischen Bewegung des Verdeckkastendeckels 22 zeichnen sich dadurch aus, dass hierdurch eine insbesondere hinsichtlich der Steifigkeit sehr vorteilhafte Ausführung gebildet ist, mittels welcher zudem eine hohe Positioniergenauigkeit erzielt werden kann.

Die Erfindung kann in vielfältiger Weise abgeändert werden: Die Verbindung des Motors 38 mit den Führungsbauteilen kann über Bowdenzüge erfolgen, deren Seile in Kanälen der Führungsschienen 16a, 16b so geführt sind, dass sie auch Druckkräfte übertragen.

Die Verbindung kann auch über drehmomentsteife Wellen, Zahnstangen, Ritzel, Hydraulikzylinder und Hydraulikleitungen usw. erfolgen. Es kann auch jedem Führungsbauteil ein Motor zugeordnet sein. Ähnlich kann auch der Antrieb zum Verschwenken des Verdeckkastendeckels in unterschiedlichster Weise ausgeführt sein. Die die Bewegung des Verdeckkastendeckels führende Baugruppe muss nicht zwangsläufig als vollständig vorgefertigtes Modul aufgebaut sein, vielmehr kann der Verdeckkastendeckel auch an einzeln an der Karosserie angebrachten Führungsschienen geführt sein.

Es muss nicht zwangsläufig auf jeder Seite des Verdeckkastendeckels 22 eine Führungsschiene vorgesehen sein, sondern bei entsprechend stabiler Ausbildung der Führung kann eine einseitige Führung genügen. In der Stellung gemäß Fig. 3c) oder 3d) kann der Verdeckkastendeckel 22 als Windschott benutzt werden.

## Patentansprüche

1. Cabriolet-Fahrzeug mit einem im Heckbereich des Fahrzeugs ablegbaren Verdeck (10), einem Verdeckkastendeckel (22), der in einer etwa waagerechten Verdeckabdeckstellung das abgelegte Verdeck (10) zumindest teilweise abdeckt, wenigstens einer seitlich an der Fahrzeugkarosserie im Bereich vor dem abgelegten Verdeck (10) befestigten, etwa senkrecht verlaufenden Führungsschiene (16), in der ein Führungsbauteil (18) auf- und abwärts verschiebbar ist, an welchem Führungsbauteil (18) der Verdeckkastendeckel (22) um eine etwa quer zur Fahrzeuglängsrichtung verlaufende Schwenkachse(L-L) schwenkbar angebracht ist, einem Antrieb (38, 40, 106) zum Auf- und Abwärtsbewegen des Führungsbauteils (18) und einem Schwenkantrieb (42, 50, 116) zum Schwenken des Verdeckkastendeckels (22) so dass der Verdeckkastendeckel (22) aus seiner Verdeckabdeckstellung in eine Verdeckfreigabestellung bewegbar ist, in der er sich in einer etwa senkrechten, abgesenkten Stellung bezogen auf die Fahrzeuglängsrichtung vor dem abgelegten Verdeck (10) befindet,
**dadurch gekennzeichnet,**
**dass** der Verdeckkastendeckel (22) unmittelbar aus seiner abgesenkten und etwa senkrechten Verdeckfreigabestellung heraus in eine etwa waagerechte Zwischenstellung schwenkbar ist, in der der Verdeckkastendeckel (22) an der dem Fahrzeugheck zugewandten Seite der Führungsschiene (16) angeordnet ist, und aus der Zwischenstellung in eine angehobene Hutablagestellung anhebbar ist.

2. Cabriolet-Fahrzeug nach Anspruch 1,
**dadurch gekennzeichnet,**
**dass** die Schwenkachse (L-L) an der dem Fahrzeugheck zugewandten Seite der Führungsschiene (16) angeordnet ist.

3. Cabriolet- Fahrzeug nach Anspruch 1 oder 2,
**dadurch gekennzeichnet,**
**dass** an jeder Fahrzeugseite eine Führungsschiene (16a, 16b) angeordnet ist, in der ein Führungsbauteil (18a, 18b) verschiebbar ist und dass der Verdeckkastendeckel (22) an jedem der Führungsbauteile schwenkbar gelagert ist.

4. Cabriolet-Fahrzeug nach Anspruch 3,
**dadurch gekennzeichnet,**
**dass** ein gemeinsamer Antrieb (38, 40a, 40b, 106) zum Auf- und Abwärtsbewegen jeder der Führungsbauteile (18a, 18b) vorgesehen ist.

5. Cabriolet-Fahrzeug nach Anspruch 4,
**dadurch gekennzeichnet,**
**dass** der Antrieb zum Auf- und Abwärtsbewegen der Führungsbauteile einen Motor (38, 106) enthält, der mit jedem Führungsbauteil (18a, 18b) bewegungsübertragend (40a, 40b) verbunden ist.

6. Cabriolet-Fahrzeug nach einem der Ansprüche 3 bis 5,
**dadurch gekennzeichnet,**
**dass** ein gemeinsamer Schwenkantrieb (42, 50, 116) zum Verdrehen von an den Führungsbauteilen (18a, 18b) angeordneten Lagerungen für den Verdeckkastendeckel (22) vorgesehen ist.

7. Cabriolet-Fahrzeug nach Anspruch 6,
**dadurch gekennzeichnet,**
**dass** der gemeinsame Schwenkantrieb einen Motor (42, 116) enthält, der mit den Lagerungen des Verdeckkastendeckels (22) über torsionssteife Wellen (50a, 50b, 124) verbunden ist.

8. Cabriolet-Fahrzeug nach einem der Ansprüche 1 bis 7, mit einem vormontierbaren Verdeckkastendeckelmodul (24, 100), enthaltend
den Verdeckkastendeckel (22), der zwischen einer in etwa waagerechten Verdeckabdeckstellung und einer in etwa Verdeckfreigabestellung, in der er sich in einer etwa senkrechten, abgesenkten Stellung befindet, um eine Schwenkachse (L-L) schwenkbar ist und entlang wenigstens einer in etwa senkrecht verlaufender Führungsschiene (16) mit einem Führungsbauteil (18) auf- und abwärts verschiebbar ist, wobei der Verdeckkastendeckel (22) unmittelbar aus seiner abgesenkten und etwa senkrechten Verdeckfreigabestellung heraus in eine etwa waagerechte Zwischenstellung schwenkbar ist, in der der Verdeckkastendeckel (22) an einer in Einbausituation dem Fahrzeugheck zugewandten Seite der Führungsschiene (16) angeordnet ist, und aus der Zwischenstellung in eine angehobenen Hutablagestellung anhebbar ist.

9. Cabriolet-Fahrzeug nach Anspruch 8,
**dadurch gekennzeichnet,**
**dass** das Verdeckkastendeckelmodul (24, 100)eine an einer Fahrzeugkarosserie befestigbare Tragbaugruppe (28) mit zwei seitlichen Führungsschienen (16a, 16b), die über einen Querträger (26) verbunden sind,
je ein in einer der Führungsschienen geführtes Führungsbauteil(18a, 18b) mit einem Lagerarm (30a, 30b), an dem ein vorderer Endbereich des Verdeckkastendeckels (22) schwenkbar gelagert ist, und
wenigstens einen Motor (38, 42, 106, 116) zum Verschwenken des Verdeckkastendeckels (22) und zur Bewegung der Führungsbauteile enthält.

10. Cabriolet-Fahrzeug nach Anspruch 9,
**dadurch gekennzeichnet,**
**dass** ein Motor (42, 116) zum Verschwenken des Verdeckkastendeckels und ein Motor (38, 106) zur Bewegung der Führungsbauteile vorgesehen ist.

11. Cabriolet-Fahrzeug nach einem der Ansprüche 9 oder 10,
**dadurch gekennzeichnet,**
**dass** ein die Führungsbauteile verbindender Verbindungsträger (44) vorgesehen ist.

12. Cabriolet-Fahrzeug nach einem der Ansprüche 9 bis 11,
**dadurch gekennzeichnet,**
**dass** wenigstens einer der Motoren (42, 116) an dem Verbindungsträger (44) angeordnet ist.

13. Cabriolet-Fahrzeug nach einem der Ansprüche 9 bis 12,
**dadurch gekennzeichnet,**
**dass** wenigstens einer der Motoren (38, 106) an dem Querträger (26) angeordnet ist.

14. Verfahren zum Betätigen eines Verdeckkastendeckels (22) in Abstimmung mit der Betätigung eines Verdecks (10) eines Cabriolet-Fahrzeugs nach einem der vorhergegenden Ansprüche, enthaltend folgende, von dem unter dem in einer etwa waagerechten Verdeckabdeckstellung befindlichen Verdeckkastendeckel (22) in einem Verdeckaufnahmebereich des Fahrzeugs zusammengelegten Verdeck (10) ausgehenden Schritte:
- Schwenken des Verdeckkastendeckels (22) in eine etwa senkrechte Stellung durch Aufwärtsschwenken seines Hinterrandes,
- Absenken des in etwa senkrechter Stellung befindlichen Verdeckkastendeckels in einem Bereich vor dem zusammengelegten Verdeck (10),
- Schließen des Verdecks (10),
- Schwenken des in abgesenkter Stellung befindlichen Verdeckkastendeckels (22) in eine etwa waagerechte Stellung durch Abwärtsschwenken seines Hinterrandes und
- Anheben des in etwa waagerechter Stellung befindlichen Verdeckkastendeckels (22) in eine Hutablagestellung, in der er den Innenraum des Fahrzeugs von dessen Gepäckraum (14) abtrennt.

## Claims

1. A convertible vehicle comprising a hood (10) which can be stowed in the rear area of the vehicle, a hood compartment cover (22) which covers the stowed hood (10) at least partially in an approximately horizontal hood-covering position, at least one guide rail (16) which is laterally mounted to the vehicle body in the area in front of the stowed hood (10), which guide rail (16) extends approximately vertically, and wherein a guide component (18) can be moved up and down, said guide component (18) having the hood compartment cover (22) mounted to it such that the latter can be swiveled about a swivel axis (L-L) that extends approximately transversely to the longitudinal vehicle direction, the convertible vehicle further comprising a drive (38, 40, 106) for moving the guide component (18) up and down and a swivel drive (42, 50, 116) for swiveling the hood compartment cover (22) such that the hood compartment cover (22) can be moved from its hood-covering position into a hood-releasing position in which the hood compartment cover (22) is at an approximately vertical, lowered position in front of the stowed hood (10) with respect to the longitudinal vehicle direction,
**characterized in that**
the hood compartment cover (22) can be swiveled directly from its lowered, approximately vertical hood-releasing position into an approximately horizontal intermediate position in which the hood compartment cover (22) is arranged on the side of the guide rail (16) facing towards the rear of the vehicle, and from which intermediate position the hood compartment cover (22) can be lifted up to a raised rear shelf position.

2. Convertible vehicle according to claim 1,
**characterized in that**
the swivel axis (L-L) is arranged on the side of the guide rail (16) facing towards the rear of the vehicle.

3. Convertible vehicle according to claim 1 or 2,
**characterized in that**
a guide rail (16a, 16b) within which a guide component (18a, 18b) is movable is arranged on either side of the vehicle and that the hood compartment cover (22) is pivotably mounted to each of the guide components.

4. Convertible vehicle according to claim 3,
**characterized in that**
a common drive (38, 40a, 40b, 106) is provided for moving each of the guide components (18a, 18b) up and down.

5. Convertible vehicle according to claim 4,
**characterized in that**
the drive for moving the guide components up and down includes a motor (38, 106) that is connected to each guide component (18a, 18b) in a movement-transmitting manner (40a, 40b).

6. Convertible vehicle according to any one of claims 3 to 5,
**characterized in that**
a common swivel drive (42, 50, 116) is provided in order to rotate bearings for the hood compartment cover (22) that are arranged on the guide components (18a, 18b).

7. Convertible vehicle according to claim 6,
**characterized in that**
the common swivel drive includes a motor (42, 116) that is connected to the bearings of the hood compartment cover (22) via torsion-resistant shafts (50a, 50b, 124).

8. Convertible vehicle according to any one of claims 1 to 7, comprising a premountable hood compartment cover module (24, 100), including the hood compartment cover (22) that can be swiveled about a swivel axis (L-L) between an approximately horizontal hood-covering position and a hood-releasing position, in which the hood compartment cover (22) is in an approximately vertical, lowered position, and that can be moved up and down by a guide component (18) along at least one guide rail (16), which extends in an approximately vertical direction, and the hood compartment cover (22) can be swiveled directly from its lowered, approximately vertical hood-releasing position into an approximately horizontal intermediate position, in which the hood compartment cover (22) is arranged on a side of the guide rail (16) that faces towards the rear of the vehicle in a mounted condition, and the hood compartment cover (22) can be raised from the intermediate position to a raised rear-shelf position.

9. Convertible vehicle according to claim 8,
**characterized in that**
the hood compartment cover module (24, 100) includes a support assembly (28) that can be mounted to a vehicle body and comprises two lateral guide rails (16a, 16b) that are connected with each other via a crossbar (26),
one guide component (18a, 18b) each guided in one of the guide rails and comprising a supporting arm (30a, 30b) to which a front end region of the hood compartment cover (22) is pivotably mounted, and
at least one motor (38, 42, 106, 116) for swiveling the hood compartment cover (22) and for moving the guide components.

10. Convertible vehicle according to claim 9,
**characterized in that**
a motor (42, 116) is provided for swiveling the hood compartment cover and a motor (38, 106) is provided for moving the guide components.

11. Convertible vehicle according to any one of claims 9 or 10,
**characterized in that**
a connecting member (44) is provided for connecting the guide components.

12. Convertible vehicle according to any one of claims 9 to 11,
**characterized in that**
at least one of the motors (42, 116) is arranged on the connecting member (44).

13. Convertible vehicle according to any one of claims 9 to 12,
**characterized in that**
at least one of the motors (38, 106) is arranged on the crossbar (26).

14. A method for operating a hood compartment cover (22) in synchronisation with the operation of a hood (10) of a convertible vehicle according to any one of the preceding claims, which method comprises the following steps, starting from the hood (10) that is folded beneath the hood compartment cover (22) in a hood-receiving region of the vehicle, when the hood compartment cover (22) is in an approximately horizontal hood-covering position:
- swiveling the hood compartment cover (22) into an approximately vertical position by swiveling the rear edge of the hood compartment cover (22) upwards,
- lowering the hood compartment cover, which is in an approximately vertical position, in a region in front of the folded hood (10),
- closing the hood (10),
- swiveling the hood compartment cover (22), which is in the lowered position, to an approximately horizontal position, by swiveling the rear edge of the hood compartment cover (22) down, and
- raising the hood compartment cover (22), which is in an approximately horizontal position, to a rear-shelf position, in which the hood compartment cover (22) separates the interior of the vehicle from its luggage compartment (14).

## Revendications

1. Véhicule cabriolet comprenant une capote (10) qui est déposable à l'arrière du véhicule, un couvercle (22) pour le compartiment de capote qui, dans une position approximativement horizontale de recouvrement de la capote, recouvre au moins partiellement la capote déposée (10), au moins un rail de guidage (16) qui est monté latéralement à la carrosserie dans la partie devant la capote déposée (10), ce rail de guidage (16) s'étendant approximativement verticalement et permettant le glissement en haut et en bas d'un élément de guidage (18) auquel le couvercle (22) du compartiment de capote est monté à pivotement autour d'un axe de pivotement (L-L) s'étendant dans une direction approximativement transversale à la direction longitudinale du véhicule, ledit véhicule cabriolet comprenant en plus un entraînement (38, 40, 106) pour le mouvement en haut et en bas de l'élément de guidage (18) et un entraînement pivotant (42, 50, 116) pour pivoter le couvercle (22) du compartiment de capote de manière à permetter le mouvement de ce dernier de sa position de recouvrement de la capote vers une position de libération de la capote, où le couvercle (22) du compartiment de capote se trouve dans une position abaissée, approximativement verticale, devant la capote déposée (10) par rapport à la direction longitudinale du véhicule,
**caractérisé en ce que**
le couvercle (22) du compartiment de capote peut être pivoté directement de sa position abaissée, approximativement verticale de libération de la capote vers une position intermédiaire, approximativement horizontale dans laquelle le couvercle (22) du compartiment de capote est disposé du côté du rail de guidage (16) tourné vers l'arrière du véhicule, et à partir de laquelle position intermédiaire le couvercle (22) du compartiment de capote peut être levé vers une position levée dite de plage arrière.

2. Véhicule cabriolet selon la revendication 1,
**caractérisé en ce que**
l'axe de pivotement (L-L) est disposé du côté du rail de guidage (16) tourné vers l'arrière du véhicule.

3. Véhicule cabriolet selon la revendication 1 ou 2,
**caractérisé en ce que**
l'on dispose de chaque côté du véhicule un rail de guidage (16a, 16b) dans lequel un élément de guidage (18a, 18b) peut glisser, et **en ce que** le couvercle (22) du compartiment de capote est monté à pivotement à chacun des éléments de guidage.

4. Véhicule cabriolet selon la revendication 3,
**caractérisé en ce que**
l'on prévoit un entraînement commun (38, 40a, 40b, 106) pour le mouvement en haut et en bas de chaque élément de guidage (18a, 18b).

5. Véhicule cabriolet selon la revendication 4,
**caractérisé en ce que**
l'entraînement pour le mouvement en haut et en bas des éléments de guidage comprend un moteur (38, 106) raccordé à transmission de mouvement (40a, 40b) à chaque élément de guidage (18a, 18b).

6. Véhicule cabriolet selon l'une quelconque des revendications 3 à 5,
**caractérisé en ce que**
l'on prévoit un entraînement pivotant commun (42, 50, 116) permettant la rotation de paliers pour le couvercle (22) du compartiment de capote qui sont disposés sur les éléments de guidage (18a, 18b).

7. Véhicule cabriolet selon la revendication 6,
**caractérisé en ce que**
l'entraînement pivotant commun comporte un moteur (42, 116) qui est raccordé aux paliers du couvercle (22) du compartiment de capote au moyen d'arbres résistant à la torsion (50a, 50b, 124).

8. Véhicule cabriolet selon l'une quelconque des revendications 1 à 7, avec un module prémontable (24, 100) pour le couvercle du compartiment de capote, ce module comprenant
le couvercle (22) du compartiment de capote, qui peut être pivoté autour d'un axe de pivotement (L-L) entre une position approximativement horizontale de couvrage de la capote et une position de libération de la capote, dans laquelle il se trouve dans une position abaissée, approximativement verticale, et qui peut être déplaçé en haut et en bas le long d'au moins un rail de guidage (16), qui s'étend dans une direction approximativement verticale, par un élément de guidage (18), et le couvercle (22) du compartiment de capote peut être pivoté directement de sa position abaissée, approximativement verticale de libération de la capote vers une position intermédiaire, approximativement horizontale, dans laquelle le couvercle (22) du compartiment de capote est disposé d'un côté du rail de guidage (16) tourné vers l'arrière du véhicule dans une condition montée, et le couvercle (22) du compartiment de capote peut être levé de la position intermédiaire à une position levée de plage arrière.

9. Véhicule cabriolet selon la revendication 8,
**caractérisé en ce que**
le module (24, 100) de couvercle du compartiment de capote comprend un ensemble de support (28) qui peut être monté à une carrosserie et qui comprend deux rails de guidage latéraux (16a, 16b) qui sont raccordés les uns aux autres au moyen d'une barre transversale (26),
des éléments de guidage (18a, 18b) dont chacun est guidé respectivement dans un des rails de guidage et comprenant un bras de support (30a, 30b) auquel une zone d'extrémité avant du couvercle (22) du compartiment de capote est monté à pivotement, et
au moins un moteur (38, 42, 106, 116) pour le pivotement du couvercle (22) du compartiment de capote et pour le mouvement des éléments de guidage.

10. Véhicule cabriolet selon la revendication 9,
**caractérisé en ce que**
l'on prévoit un moteur (42, 116) pour le pivotement du couvercle du compartiment de capote et un moteur (38, 106) pour le mouvement des éléments de guidage.

11. Véhicule cabriolet selon l'une quelconque des revendications 9 ou 10,
**caractérisé en ce que**
l'on prévoit un élément de raccord (44) pour relier les éléments de guidage les uns aux autres.

12. Véhicule cabriolet selon l'une quelconque des revendications 9 à 11,
**caractérisé en ce que**
l'on dispose au moins un des moteurs (42, 116) sur l'élément de reliage (44).

13. Véhicule cabriolet selon l'une quelconque des revendications 9 à 12,
**caractérisé en ce que**
l'on dispose au moins un des moteurs (38, 106) sur la barre transversale (26).

14. Procédé d'agencement d'un couvercle (22) du compartiment de capote en synchronisation avec l'agencement de la capote (10) d'un véhicule cabriolet selon l'une quelconque des revendications précédentes, ce procédé comprenant les étapes suivantes, à partir de la capote (10), qui est pliée au-dessous du couvercle (22) du compartiment de capote dans une zone de logement de capote du véhicule, quand le couvercle (22) du compartiment de capote se trouve dans une position approximativement horizontale de recouvrement de la capote:
- pivotement du couvercle (22) du compartiment de capote vers une position approximativement verticale par pivotement en haut du bord arrière du couvercle (22) du compartiment de capote,
- abaissement du couvercle du compartiment de capote, qui se trouve dans une position approximativement verticale, dans une zone devant la capote (10) pliée,
- fermeture de la capote (10),
- pivotement du couvercle (22) du compartiment de capote, qui se trouve dans la position abaissée, vers une position approximativement horizontale par pivotement en bas du bord arrière du couvercle (22) du compartiment de capote, et
- levage du couvercle (22) du compartiment de capote, qui se trouve dans une position approximativement horizontale, vers une position de plage arrière, dans laquelle il sépare l'intérieur du véhicule du coffre à bagages (14).
